# EUROPÄISCHE PATENTSCHRIFT

(11) **EP 0 606 418 B1**
(45) Veröffentlichungstag und Bekanntmachung des Hinweises auf die Patenterteilung: **23.04.1997**
(21) Anmeldenummer: 93912528.2
(22) Anmeldetag: 21.06.1993
(51) Int. Cl.: E04B 7/12

(54) **DACHELEMENT**
ROOF ELEMENT
ELEMENT DE TOITURE

(30) Priorität: 24.06.1992 CH 1993/92
(43) Veröffentlichungstag der Anmeldung: 20.07.1994
(73) Patentinhaber: PMS ENERGIE AG, 8617 Mönchaltorf (CH); ALPHA REAL AG, CH-8008 Zürich (CH)
(72) Erfinder: TOGGWEILER, Peter, CH-8617 Mönchaltorf (CH); PRINZ, Hanspeter, CH-8820 Wädenswil (CH)
(74) Vertreter: Schwabe - Sandmair - Marx
(86) Internationale Anmeldenummer: CH9300158
(87) Internationale Veröffentlichungsnummer: WO9400650

(56) Entgegenhaltungen:
- WO-A-92/09768
- DE-A- 2 819 901
- FR-A- 862 113
- FR-A- 2 079 687
- GB-A- 801 367
- US-A- 1 419 126
- US-A- 4 162 595

## Beschreibung

Die Erfindung betrifft eine Vorrichtung nach dem Oberbegriff des Anspruchs 1.

Flachdächer sind aus Witterungsgründen einer starken Alterung unterworfen und schadenanfällig. Dies bedingt periodische, kostspielige Renovationen. Schäden sind schwer zu eruieren und deren Behebung ist oft sehr aufwendig. Die zunehmend eingesetzten Sonnenenergieanlagen können auf den heutigen Flachdächern nur mit aufwendigen Fundamenten aufgestellt werden, und bei einer Sanierung des Dachs ist eine umständliche Demontage der Solaranlage nicht zu umgehen. Zudem sind die durch die heutigen Flachdachbauweisen bedingten Aufstellungsverfahren für Solaranlagen in ästhetischer Hinsicht unbefriedigend. Gemäss dem heutigen Stand der Technik werden Flachdächer meistens als sogenannte Kiesdächer ausgeführt. Bei diesen wird auf der Deckenplatte normalerweise eine Wasserisolation angebracht. Diese besteht heute meistens aus einer Kunststoffolie. Früher wurde eine Schicht aus geteerter Dachpappe auf den Beton aufgeklebt. Auf die Wasserisolation wird normalerweise ein Betonestrich oder Schutzmörtel als mechanischer Schutz und als zusätzliche Wärmedämmung angebracht. Auf diesen folgt zunächst eine Entwässerungsschicht, z.B. aus Blähtonkugeln, und sodann eine Filtermatte (Glasfaservlies), auf welche schliesslich die Kiesschicht geschüttet wird. Als Alternativen sind heute mit Humus überdeckte Dächer, sowie Dachkonstruktionen mit einer Dachhaut aus gefalzten, verlöteten Blechen verfügbar. Die Lebensdauer aller heutigen Flachdachkonstruktionen ist beschränkt. Normalerweise muss etwa alle 20 Jahre eine Renovation ausgeführt werden. Schäden an Flachdächern, in Form von Undichtigkeiten in der Wasserisolation, sind häufig. Solche Undichtigkeiten können nicht nur im Lauf der Zeit durch Alterung des Materials oder gewaltsame Einwirkung entstehen. Häufig entstehen kleine Perforationen bereits beim Verlegen durch unachtsame Arbeitsweise, z.B. durch das Begehen mit genagelten Schuhen oder das Einpressen spitzer Fremdkörper. Undichtigkeiten in Flachdächern machen sich oft erst nach langer Zeit bemerkbar, und häufig ist die Stelle, wo das Wasser durch das Betondach ins Gebäudeinnere dringt, weit von der Perforationsstelle entfernt, weil das Wasser unter der Folie wandert, bis es eine geeignete Durchtrittsstelle im Beton findet. Das Aufsuchen der Schadensstelle und die Schadensbehebung ist deshalb sehr aufwendig und kostspielig. Sowohl bei einer Reparatur, wie auch bei einer Gesamtsanierung, muss sowohl die Kiesschicht als auch der Betonestrich ganz oder teilweise abgetragen und wieder erstellt werden. Das Aufstellen von Solaranlagen auf Dachkonstruktionen dieser Art ist schwierig. Wegen der geringen Tragkraft der Kiesschicht, und vor allem, weil die empfindliche Wasserisolation nicht angetastet werden darf, sind praktisch nur voluminöse Schwerlastfundamente aus Beton möglich. Diese bedingen einen hohen Materialaufwand. Ferner wird die Betondachplatte durch entsprechende hohe zusätzliche Totlasten beansprucht. Das bedingt eine stärkere Dimensionierung des Betondaches, oder es kann bei einem bestehenden Gebäude ein nachträglicher Einbau einer Solaranlage verunmöglicht werden, weil das Dach die hohen Zusatzlasten der Betonfundamente nicht tragen kann. Ein Hauptproblem besteht jedoch darin, dass bei einer Sanierung oder Reparatur nicht nur die Solargestelle, sondern auch die schweren Fundamente abgebaut werden müssen, um die darunterliegende Dachfläche für die Arbeiten zugänglich zu machen.

Gemäß FR-A-862 113 ist ein modulares Dachelement mit rechteckigem Grundriß zur Flachdachabdeckung bekannt, das eine aufrechte erste Wand und eine aufrechte zweite Wand aufweist. Diese beiden Wände ermöglichen ein Ineinandergreifen benachbarter Dachelemente. Darüber hinaus weist das Dachelement eine gegenüber der Dachfläche geneigte erste Fläche auf, die durch Fensterglaseinsätze teilweise unterbrochen ist. Ferner ist eine zweite Schrägfläche vorgesehen, die zusammen mit der ersten Fläche die Hauptoberfläche des Dachelements bildet. Die erste Fläche, wie auch die zweite Fläche sind nicht rechteckig ausgebildet, so daß benachbarte Dachelemente keine geschlossene Gesamtdachfläche bilden. Der Nachteil sind erhöhte Korrusion durch die zusätzlichen Kanten der Dachoberfläche und eine aufwendige Konstruktion der Gesamtanordnung. Das Dachelement gemäß FR-A-862 113 lehrt ferner nicht die Verwendung von Photovoltaikelementen.

Die Anordnung gemäß dem Stand der Technik hat somit zahlreiche Nachteile hinsichtlich einer Aufwendigkeit der Konstruktion, Korrusionsanfälligkeit wegen erhöhter Oberfläche und zahlreicher Kanten, und eine reduzierte Anbringungsfläche für Photovoltaikelemente. Die Druckschrift WO 92/09768 lehrt die Verwendung langer mit Photovoltaikelementen beschichteter Bahnen zur Abdeckung von Schrägdächern. Die Bahnen werden parallel auf dem Dach angeordnet und mittels Wulsten miteinander verbunden. Derartige Bahnen sind zum Abdecken von Flachdächern ungeeignet, da sie den Abfluß von Wasser nicht ermöglichen, was zu Korrusion und Beschädigung der Photovoltaikelemente führt.

Es ist deshalb Aufgabe der vorliegenden Erfindung, modulartige Dachelemente zur Flachdachabdeckung zu schaffen, die durch ihre Schräglage den optimalen Sonneneinstrahlungswinkel nutzen können, aufgrund ihrer Anordnung einheitliche Dachbahnen bilden und deswegen einer nur geringen Korrusion ausgesetzt sind und die eine problemlose und ästhetisch ansprechende Integration einer Solaranlage erlauben.

Zudem soll die Erfindung eine unterhaltsfreundliche, billige und sichere Dachkonstruktion schaffen.

Die Aufgabe wird erfindungsgemäss mit Hilfe der Ausbildungsmerkmale nach dem kennzeichnenden Teil des Patentanspruches 1 gelöst. Gegenstand der Erfindung sind Dachelemente, aus denen ein Flachdach modular aufgebaut werden kann. Die Solarelemente werden direkt auf die dafür vorgesehenen Elementflächen montiert oder in dieselben integriert.

Die Erfindung ist unter anderem in den zeichnungen erläutert. Es zeigen:

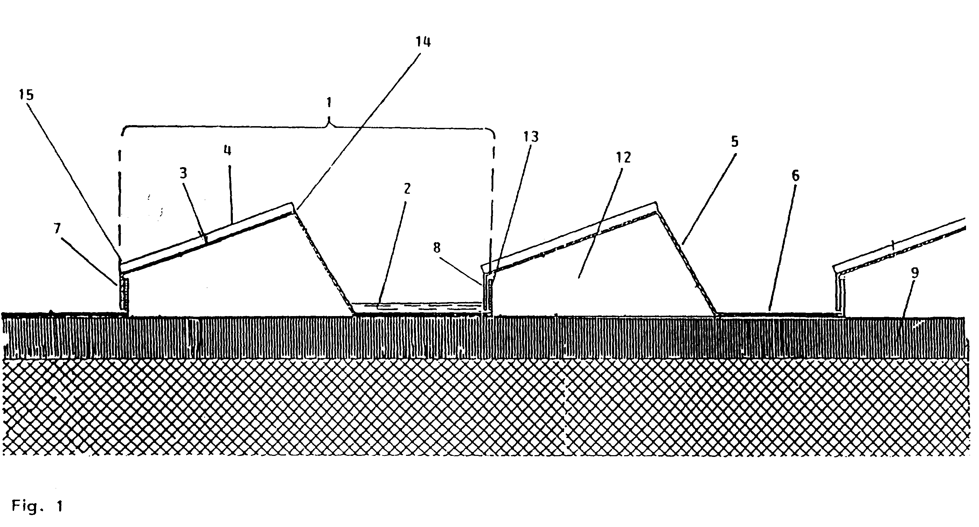

- Fig. 1: Querschnitt durch ein Flachdach gemäss der Erfindung, Variante ohne sekundäre Wasserrinne.
- Fig. 2a: Querschnitt durch ein Flachdach gemäss der Erfindung, Variante ohne sekundäre Wasserrinne, mit zusätzlichen Abstützungen.
- Fig. 2b: Querschnitt durch ein Flachdach gemäss der Erfindung, Variante mit sekundärer Wasserrinne, mit zusätzlichen Abstützungen.
- Fig. 3a: Grundriss eines Flachdaches gemäss der Erfindung, mit sekundärer Wasserrinne.
- Fig. 3b: Längsschnitt durch ein Flachdach gemäss der Erfindung, mit sekundärer Wasserrinne.
- Fig. 4: Seitenansicht der sekundären Wasserrinne.

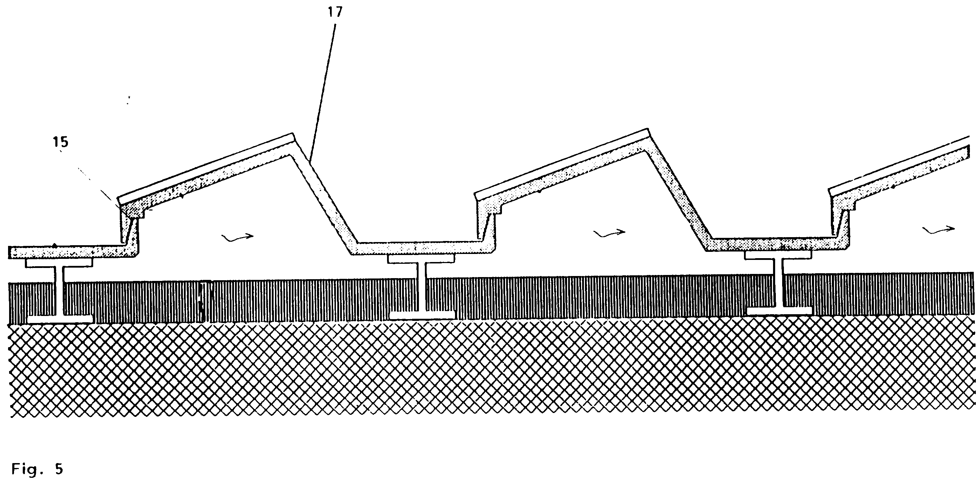

- Fig. 5: Querschnitt durch ein Flachdach gemäss der Erfindung, mit Betonelementen, Variante 1.
- Fig. 6: Querschnitt durch ein Flachdach gemäss der Erfindung, mit Betonelementen, Variante 2.

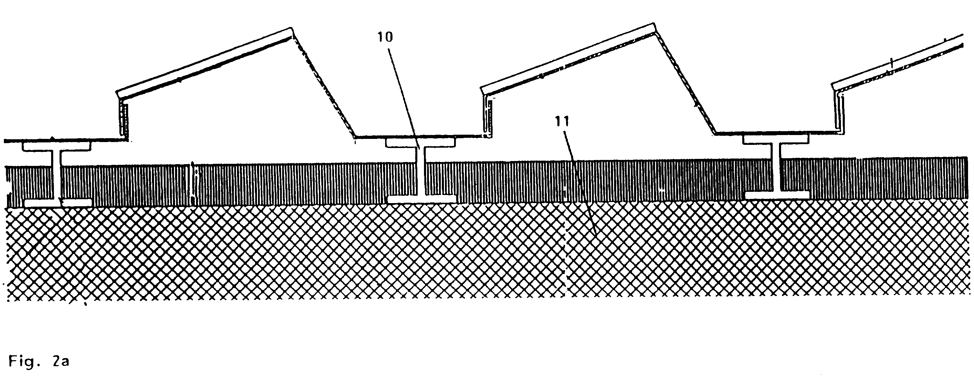

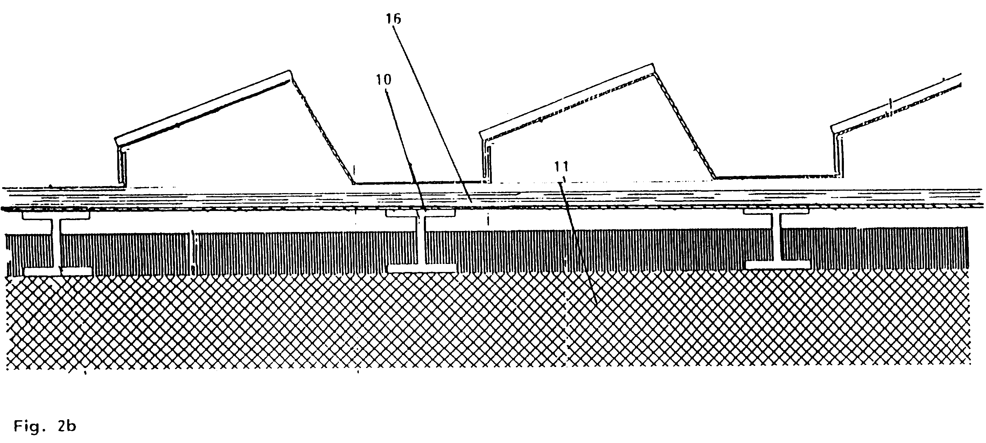

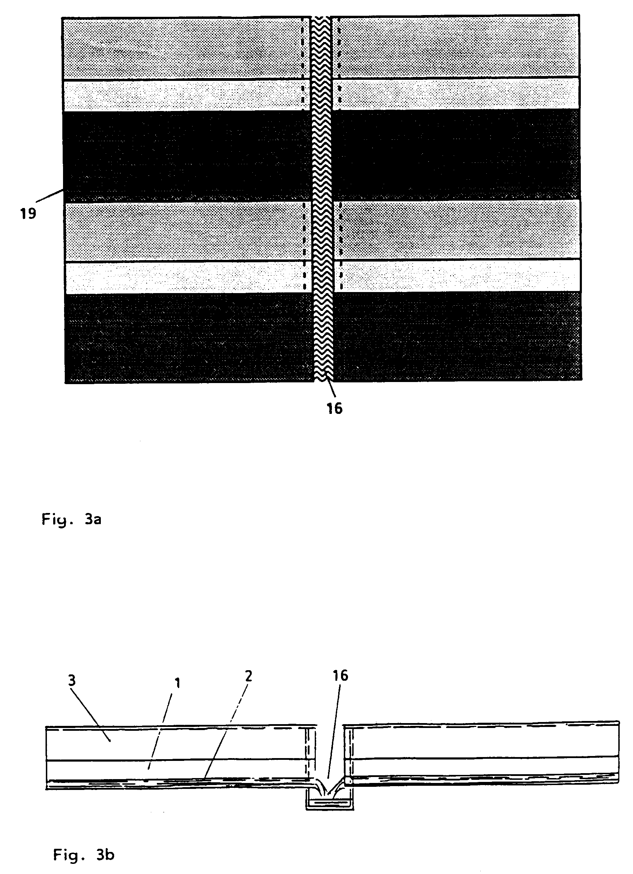

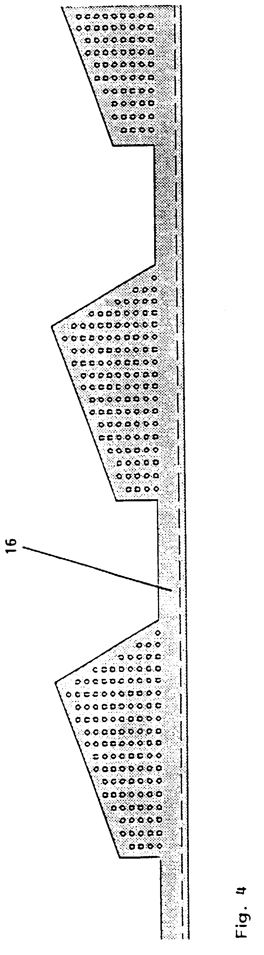

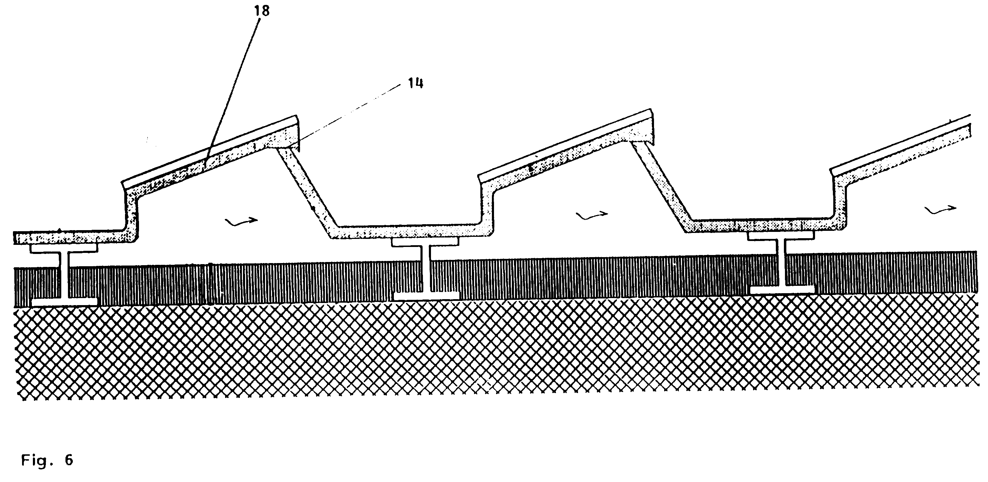

Wesentlicher Teil der Erfindung sind die besonders und auf charakteristische Weise geformten Dachelemente 1. Die Elemente sind so geformt, dass sie einzeln abdichtend ineinander eingreifen. Das einzelne Dachelement 1 ist folgendermassen aufgebaut: Es weist einen rechteckigen Grundriss auf. Auf der ersten Seite wird es durch eine niedrige, rechteckförmige und senkrecht oder schräg stehende Wand 7 abgegrenzt. An der Oberkante dieser Wand 7 schliesst eine leicht schräg geneigte, rechteckige Fläche 3 an, auf die eine schräg abfallende, ebenfalls rechteckige Fläche 5 folgt, deren Unterkante auf der Wärmeisolationsschicht 9 des Flachdaches bzw. auf speziellen Auflagern 10 aufliegt. An dieser Unterkante schliesst eine horizontale, auf der Wärmeisolationsschicht 9 bzw. auf den Auflagern 10 aufliegende, rechteckförmige Platte 6 an. Die zweite Seite des Dachelementes 1 wird ebenfalls durch eine niedrige, rechteckförmige und senkrecht oder schräg stehende Wand 13 abgeschlossen. Die schräg abfallende Fläche 5, die horizontale Platte 6 und die senkrechte Wand 13 bilden eine Wassersammel- und Ablaufrinne 2. Die leicht schräg geneigte Fläche 3, deren Neigungswinkel optimal an die Sonneneinstrahlungsverhältnisse angepasst ist, kann direkt mit den Photovoltaikelementen 4 bestückt werden. Die schräg abfallende Fläche 5 und die horizontale Platte 6 reflektieren die Sonnenstrahlung diffus und vergrössern so die effektive Strahlungserfassungsfläche, wodurch ein grösserer Anteil der auf die gesamte Dachfläche eingestrahlten Sonnenstrahlungsenergie genutzt wird. Die Höhe der vertikalen Wände 7,13 ist so gewählt, dass die Wasserauffang- und -ableitrinne 2 ein genügendes Auffangvermögen für das anfallende Regenwasser hat, und dass der Wasserstand die Oberkante der Wand 13 nicht überfluten kann. Die Elementübergänge erhalten eine geeignete obere Aufnahmefläche oder Befestigungsmöglichkeit. Der Elementübergang kann sich bei den Punkten 14 oder 15 befinden. Bei der Ausführung des Elementüberganges gemäss Fig. 6 wird der Rand des überlappenden Teils der Fläche 3 als Tropfkante ausgebildet. Als Material für die Dachelemente kommen nebst Metallblech Sandwichkonstruktionen aus Kunststoff, Beton, Ton, Glas oder weitere Materialien in Frage. Das Dach wird bei kleineren Elementlängen direkt auf die Wärmeisolationsschicht 9 gestellt. Bei grösseren Elementlängen werden gemäss Fig. 2 die Auflager 10 verwendet, um die durch das Eigengewicht der Dachelemente 1, der Solarelemente 4, durch Regenwasser und Schnee sowie durch das Dach begehende Personen entstehenden Lasten direkt auf die Betondachplatte 11 abzustützen. Die Auflager können aus Holz, aus Metallprofilen oder anderen geeigneten Bauelementen bestehen. Bei grossen Abmessungen des Daches in der Achsrichtung der Elemente beinhaltet die Erfindung gemäss Fig. 2b, 3a, 3b und 4 eine zur ersten Ablaufrinne und zur Achse der Elemente senkrecht stehende, sekundäre Ablaufrinne 16 an der Stirnseite der einzelnen Elemente. Die einzelnen Dachelemente werden dann direkt auf die Seitenwände der sekundären Wasserablaufrinne 16 aufgesetzt, wie in Fig. 3a, 3b dargestellt ist. In Fig. 3a wird das Dachelement 19 in der Stellung unmittelbar vor dem Aufsetzen auf die sekundäre Wasserrinne 16 gezeigt. Die äussere Dachfläche oder der Hohlraum kann hinterlüftet werden, was aus bauphysikalischen Gründen von Vorteil ist. Zu diesem Zweck werden die Seitenwände der sekundären Wasserablaufrinne 16 mit Lüftungsöffnungen versehen. Die Dachkonstruktion gemäss der Erfindung bietet den Vorteil, dass der gegen die Witterung abdichtende Teil des Dachs zuäusserst liegt und deshalb problemlos inspiziert und repariert werden kann. So kann der kritische, abdichtende Teil der Dachkonstruktion periodisch gewartet und instand gehalten werden, was bei den bisherigen Konstruktionen nicht möglich war. Die Dichtigkeit des Dachs kann unmittelbar nach der Erstellung überprüft werden. Eine allfällige Erneuerung kann sich auf einzelne, schadhafte Elemente beschränken. Dadurch entsteht eine langfristig billigere, und vor allem gegen problematische Schäden sicherere Dachkonstruktion. Da der Hohlraum 12 hinterlüftet werden kann, werden die bauphysikalischen Eigenschaften des Dachs verbessert. Wegen der leichten Konstruktion des Dachs und dem Wegfall der Kies- und Betonschichten wird der Materialaufwand geringer und es müssen sowohl bei der Erstellung als auch bei Reparaturen und Erneuerungen keine schweren Hebezeuge, wie Krane, eingesetzt werden. Die Solarelemente 4 können direkt auf die dafür vorgesehene Elementfläche 3 montiert werden, wodurch die bisherigen, umständlichen und ästhetisch unbefriedigenden Solargestelle wegfallen. Durch die besondere Gestaltung der Dachelemente 1 entsteht ein Einstrahlungsgewinn, was einer besseren Ausnutzung der gesamten, auf die Dachfläche auftreffenden Sonnenenergie gleichkommt. Die Erfindung bietet die Möglichkeit, elektrische Leitungen in die Elemente zu integrieren, um die von den Solarzellen produzierte Energie abzuführen.

## Patentansprüche

1. Dachelement, das als Modul zur Flachdachabdeckung mit weiteren gleichartigen Dachelementen ineinandergreifend zusammensetzbar ist und jeweils einen rechteckigen Grundriß mit parallel verlaufenden Begrenzungskanten aufweist, wobei das Dachelement (1)
a) eine obere, leicht geneigte erste Fläche (3) aufweist, an deren zwei parallel gegenüberliegenden Seiten sich
aa) einerseits eine aufrechte erste Wand (7), welche eine erste, parallel zu den Seiten der leicht geneigten Fläche (3) verlaufende Begrenzungskante des Dachelements (1) bildet, und
bb) andererseits eine zweite, aufwärts gerichtete, gegenüber der ersten Wand (7) um die Steigung der ersten Fläche (3) höhere zweite Fläche (5) anschließt, wobei die zweite Fläche (5) im Einbauzustand an ihrer Unterkante auf dem Flachdach aufliegt und
b) in eine horizontale Platte (6) übergeht, die mit Abstand von der zweiten Fläche (5) unter Bildung einer Ablaufrinne (2) eine zweite aufrechte Wand (13), welche eine zur ersten Begrenzungskante gegenüberliegende zweite Begrenzungskante des Dachelements (1) bildet, aufweist,
**dadurch gekennzeichnet, daß**
c) die erste Fläche (3) rechteckig ist und auf der ersten Fläche Photovoltaikelemente (4) angeordnet sind.

2. Dachelement nach Anspruch 1, **dadurch gekennzeichnet,** daß die Wand (7, 13) senkrecht ausgerichtet ist.

3. Dachelement nach einem der Ansprüche 1 bis 2, **dadurch gekennzeichnet,** daß die erste Fläche (3) in einem Winkel von ca. 20° zur Horizontalen geneigt ist.

4. Dachelement nach einem der Ansprüche 1 bis 3, **dadurch gekennzeichnet,** daß die zweite Fläche (5) in einem Winkel von ca. 60° zur Horizontalen ausgerichtet ist.

5. Dachkonstruktion umfassend Dachelemente nach einem der Ansprüche 1 bis 4, **dadurch gekennzeichnet,** daß die einzelnen Dachelemente (1) an einem Übergangspunkt (15) unter gegenseitiger Überlappung der aufrechten Wände (7 und 13) ineinandergreifen.

6. Dachkonstruktion umfassend Dachelemente nach einem der Ansprüche 1 bis 4, **dadurch gekennzeichnet,** daß die einzelnen Dachelemente (1) an einem Übergangspunkt (14) zwischen der ersten Fläche (3) und der zweiten Fläche (5) aneinander liegen.

7. Dachkonstruktion umfassend Dachelemente nach einem der Ansprüche 1 bis 6, **dadurch gekennzeichnet,** daß eine in der Dachebene und senkrecht zur ersten Ablaufrinne (2) verlaufende zweite Ablaufrinne (16) vorgesehen ist.

8. Dachkonstruktion umfassend Dachelemente nach Anspruch 7, **dadurch gekennzeichnet,** daß die Dachelemente (1) jeweils auf der zweiten Ablaufrinne (16) abgestützt sind.

9. Dachkonstruktion umfassend Dachelemente nach Anspruch 5, **dadurch gekennzeichnet,** daß am Übergangspunkt (15) die erste Wand (7) eine Abstufung aufweist, die sich auf der Oberkante (8) der zweiten Wand (13) abstützt.

10. Dachkonstruktion umfassend Dachelemente nach Anspruch 6, **dadurch gekennzeichnet,** daß sich die erste Fläche (3) auf der Oberkante der zweiten Fläche (5) abstützt und die erste Fläche (3) eine die Oberkante der zweiten Fläche (5) überragende Tropfkante aufweist.

11. Dachkonstruktion umfassend Dachelemente nach einem der Ansprüche 1 bis 10, **dadurch gekennzeichnet,** daß unterhalb der ersten Fläche (3) ein hinterlüfteter Hohlraum (12) vorgesehen ist.

## Claims

1. Roof element featured as a module for covering flat roofs using other similar roof elements, the individual elements capable of being assembled so that they interlock, each element possessing a rectangular base with parallel limiting edges, said roof element (1) featuring
a) an upper, slightly sloped first surface (3) on whose parallel, opposite sides
aa) a first, upright side member (7) is joined, said side member forming a first limiting edge of the roof element (1), said limiting edge being positioned parallel to the sides of the slightly inclined surface (3),
bb) a second, vertically aligned surface (5) is joined, said surface being positioned opposite of the first side member (7), said surface being higher by the inclination of the first surface (3), with the lower edge of the second surface (5) resting on the flat roof when installed in place,
b) said roof element (1) being continued by a horizontal plate (6), said plate featuring a second vertical side member (13) spaced at a distance from the second surface (5), with a drain channel (2) being formed, said second vertical side member forming a second limiting edge of the roof element (1) on the side opposite of the first limiting edge,
**said roof element being characterized by**
c) the first surface (3) being rectangular in shape and photovoltaic elements (4) being featured on said first surface.

2. Roof element according to Claim 1, **characterized by** the side member (7, 13) being vertically aligned at a right angle.

3. Roof element according to one of the Claims 1 to 2, **characterized by** the first surface (3) being horizontally sloped at an angle of ca. 20°.

4. Roof element according to one of the Claims 1 to 3, **characterized by** the second surface (5) being horizontally sloped at an angle of ca. 60°.

5. Roof structure comprising roof elements according to one of the Claims 1 to 4, **characterized by** the individual roof elements (1) interlocking at a transition point (15), with the vertical side members (7 and 13) overlapping one another.

6. Roof structure comprising roof elements according to one of the Claims 1 to 4, **characterized by** the individual roof elements (1) contacting one another a transition point (14) between the first surface (3) and the second surface (5).

7. Roof structure comprising roof elements according to one of the Claims 1 to 6, **characterized by** a second drain channel (16) being provided for, said drain channel being located at the roof level and positioned at a right angle to the first drain channel (2).

8. Roof structure comprising roof elements according to Claim 7, **characterized by** the roof elements (1) each resting on the second drain channel (16).

9. Roof structure comprising roof elements according to Claim 5, **characterized by** the first side member (7) featuring a ledge at the transition point (15), said ledge resting on the upper edge (8) of the second side member (13).

10. Roof structure comprising roof elements according to Claim 6, **characterized by** the first surface (3) resting on the upper edge of the second surface (5) and the first surface (3) featuring a drip ledge projecting beyond the upper edge of the second surface (5).

11. Roof structure comprising roof elements according to one of the Claims 1 to 10, **characterized by** a ventilated hollow space (12) being provided for underneath the first surface (3).

## Revendications

1. Élément de couverture de toit plat pouvant être assemblé de manière modulaire en s'engrenant avec d'autres éléments de toit comportant chacun un plan horizontal rectangulaire avec des bords de délimitation parallèles, l'élément (1)
a) ayant une surface supérieure légèrement inclinée (3) comportant à ses deux cotés parallèles opposés
i) d'une part une première paroi verticale (7) formant un bord de délimitation de l'élément de toit (1) parallèle aux cotés d'une première surface légèrement inclinée (3), et
ii) d'autre part une deuxième surface inclinée comportant une hauteur augmentée de la pente de la surface supérieure (5) , connectée à un des cotés parallèles susmentionnés, à l'opposé de la première paroi (7), cette deuxième paroi (5) ayant lors du montage son bord inférieur posé sur le toit plat, et
b) passant à une plaque horizontale (6) par la deuxième surface (5) et une deuxième surface verticale (13) créant un deuxième bord de délimitation opposé au premier bord de délimitation de l'élément de toit, le tout formant une rigole d'écoulement,
**caractérisé par le fait** que
c) la première surface (3) est rectangulaire comportant sur la première surface un arrangement d'éléments photovoltaïques (4).

2. Élément de toit selon la revendication 1, **caractérisé par le fait** que la paroi (7,13) est placée de façon verticale.

3. Élément de toit selon les revendications 1 et 2, **caractérisé par le fait** que la première surface (3) est inclinée d'un angle d'environ 20° en partant de l'horizontale.

4. Élément de toit selon les revendications 1 à 3, **caractérisé par le fait** que la deuxième surface (5) est inclinée d'un angle d'environ 60° en partant de l'horizontale.

5. Structure de toiture comportant des éléments de toit selon les revendications 1 à 4, **caractérisée par le fait** que chaque élément de toit (1) s'engrène à un point de jointure (15) par un recouvrement réciproque des parois verticales (7 et 13).

6. Structure de toiture comportant des éléments de toit selon les revendications 1 à 4, **caractérisée par le fait** que chaque élément de toit (1) comporte un point de jointure (14) entre la première surface (3) et la deuxième surface (5), celles-ci étant placées l'une contre l'autre

7. Structure de toiture comportant des éléments de toit selon les revendications 1 à 6, **caractérisée par le fait** qu'une deuxième rigole d'écoulement (16) est prévue dans la surface du toit perpendiculairement à la première rigole d'écoulement (2).

8. Structure de toiture comportant des éléments de toit selon la revendication 7, **caractérisée par le fait** que les éléments de toit (1) sont chacun apposés sur la deuxième rigole d'écoulement (16).

9. Structure de toiture comportant des éléments de toit selon la revendication 5, **caractérisée par le fait** qu'au point de jointure (15), la première paroi (7) comporte un coin qui s'appuie sur le bord supérieur (8) de la deuxième paroi (13).

10. Structure de toiture comportant des éléments de toit selon la revendication 6, **caractérisée par le fait** que la première surface (3) s'appuie sur le bord supérieur de la deuxième surface (5) et que la première surface (3) comporte un bord d'égouttement dépassant le bord supérieur de la deuxième surface (5).

11. Structure de toiture comportant des éléments de toit selon les revendications 1 à 10, **caractérisée par le fait** qu'une cavité aérée est prévue sous la première surface (3).
